# EUROPEAN PATENT APPLICATION

(11) **EP 4 394 993 A1**
(43) Date of publication of application: **03.07.2024**
(21) Application number: 22902600.0
(22) Date of filing: 20.01.2022
(51) Int. Cl.: H01M 10/058, H01M 10/0585, H01M 10/0583

(54) **BAG-MAKING TYPE STACKING APPARATUS AND STACKED PRODUCT**

(30) Priority: 08.12.2021 CN 202123075424 U
(71) Applicant: SVOLT ENERGY TECHNOLOGY CO., LTD, Changzhou, Jiangsu 213200 (CN)
(72) Inventor: QIN, Jie, Changzhou, Jiangsu 213200 (CN); YIN, Dongxing, Changzhou, Jiangsu 213200 (CN); XU, Chunlong, Changzhou, Jiangsu 213200 (CN); WANG, Xuan, Changzhou, Jiangsu 213200 (CN); WANG, Xuefei, Changzhou, Jiangsu 213200 (CN); ZHAO, Kai, Changzhou, Jiangsu 213200 (CN)
(74) Representative: Groth & Co. KB
(86) International application number: PCT/CN2022/073022
(87) International publication number: WO 2023/103155

(57) **Abstract**

The present application relates to the technical field of battery production configuration, in particular to a bag-making type stacking apparatus and a stacked product. The bag-making type stacking apparatus comprises: a negative electrode bag-making system, comprising a negative electrode plate plate-making system (1) and a unit plate composite bag-making system (2) which are arranged in a spaced manner; a positive electrode plate plate-making system (3) spaced apart from the negative electrode bag-making system; a stacking device (4) spaced apart from the negative electrode bag-making system and the positive electrode plate plate-making system (3); and a carrying device (5) spaced apart from the stacking device (4), the carrying device (5) is provided with a carrying member which reciprocates between the unit plate composite bag-making system (2), the stacking device (4) and the positive electrode plate plate-making system (3). The bag-making type stacking apparatus can stack a plurality of unit plates (100) and a plurality of positive electrode plates (200) in one instance, thereby greatly improving the stacking speed, and improving the production efficiency; and importantly, the tension change amplitude of a diaphragm is small, and the diaphragm is always kept in a properly tensioned state, thereby avoiding wrinkles during stacking, prolonging the cycle life of a battery, avoiding thermal runaway caused by diaphragm contraction, and ensuring safety of the battery.

## Description

### CROSS-REFERENCE TO RELATED APPLICATION

The present application claims the priority of the Chinese patent application filed with the Chinese Patent Office on December 8, 2021 with the application number of 202123075424.9 and entitled "Bag-making Type Stacking Apparatus and Stacked Product", the contents of which are incorporated herein by reference in its entirety.

### TECHNICAL FIELD

The present application relates to the technical field of battery production configuration, in particular to a bag-making type stacking apparatus and a stacked product.

### BACKGROUND

The lithium-ion equipment technology is a key technology for the development of electric vehicles. The square stacking technology is currently one of the most advanced lithium-ion battery manufacturing technologies, and in the technology, the stacking speed directly determines the full-line capacity and manufacturing costs of cells.

A Z-shaped stacking technology is mostly adopted now. At present, the fastest speed of stacks which have been mass produced in the world is 0.6 s/chip. Using this stacking method leads to such problems as low stacking speed, large demand for devices, large floor area, high purchase cost, and high maintenance cost and large energy consumption in the later period. In addition, especially in the Z-shaped stacking process of long cells, diaphragm wrinkles easily occur due to the change of diaphragm tension and other reasons, and diaphragm wrinkles will lead to short circuit of batteries and lead to safety problems.

### SUMMARY OF THE INVENTION

In view of this, the present application aims at providing a bag-making type stacking apparatus and a stacked product, to solve the technical problems in the prior art that the existing stacking apparatus is low in production efficiency and easily leads to diaphragm wrinkles to some extent.

To achieve the above object, technical solutions adopted in the embodiments of the present application are as follows:
the present application provides a bag-making type stacking apparatus, including:
   a negative electrode bag-making system, including a negative electrode plate-making system and a unit plate composite bag-making system which are arranged in a spaced manner;
   a positive electrode plate-making system which is spaced apart from the negative electrode bag-making system;
a stacking device which is spaced apart from the negative electrode bag-making system and the positive electrode plate-making system; and
a carrying device which is spaced apart from the stacking device, the carrying device being provided with a carrying member, wherein the carrying member reciprocates between the unit plate composite bag-making system, the stacking device and the positive electrode plate-making system.

In the above technical solution, further, the negative electrode plate-making system includes:
a negative electrode blanking roll wound with negative electrode coils;
a first cutting device arranged between the negative electrode blanking roll and the unit plate composite bag-making system, wherein the first cutting device is configured to cut the negative electrode coils into negative electrode plates, and the unit plate composite bag-making system is configured to produce unit plates;

the negative electrode plate includes a current collector coated with active substances, wherein the unit plate contains the negative electrode plate and an diaphragm covering the negative electrode plate; the diaphragm covers the negative electrode plate; and the diaphragm contains a base film and a polymer coated on the surface of the base film; and
a first roll shaft arranged between the negative electrode blanking roll and the first cutting device.

In any of the above technical solutions, further, the unit plate composite bag-making system includes:
a first diaphragm blanking roll wound with a first diaphragm;
a second diaphragm blanking roll arranged to be symmetrical to the first diaphragm blanking roll and wound with a second diaphragm; and
a composite roll shaft formed with an application channel, wherein the negative electrode plate, the first diaphragm and the second diaphragm pass through the application channel, and the negative electrode plate is located between the first diaphragm and the second diaphragm.

In any of the above technical solutions, further, the unit plate composite bag-making system further includes a second cutting device which is spaced apart from the composite roll shaft in an advancing direction of the negative electrode plate, and the second cutting device is configured to cut off the first diaphragm and the second diaphragm arranged between any two arbitrary adjacent negative electrode plates.

In any of the above technical solutions, further, the unit plate composite bag-making system further includes:
a first detection device;
a negative electrode bag-making conveying device, wherein the second cutting device, the first detection device and the negative electrode bag-making conveying device are arranged at intervals in the advancing direction of the negative electrode plate.

In any of the above technical solutions, further, the positive electrode plate-making system includes:
a positive electrode blanking roll wound with positive electrode coils; and
a third cutting device spaced apart from the positive electrode blanking roll in an advancing direction of the positive electrode coils and configured to cut the positive electrode coils into positive electrode plates, wherein the positive electrode plate includes the current collector and the active substances coated on the current collector, and the unit plate covers the positive electrode plate.

In any of the above technical solutions, further, the positive electrode plate-making system further includes:
a second detection device; and
a positive electrode plate conveying device, wherein the third cutting device, the second detection device and the positive electrode plate conveying device are sequentially arranged at intervals in the advancing direction of the positive electrode plate.

In any of the above technical solutions, further, the bag-making type stacking apparatus further includes:
a first deviation correcting device which is spaced apart from the negative electrode bag-making conveying device;
a second deviation correcting device which is spaced apart from the positive electrode plate conveying device; and
the first deviation correcting device and the second deviation correcting device are located between the negative electrode bag-making conveying device and the positive electrode plate conveying device.

In any of the above technical solutions, further, the bag-making type stacking apparatus further includes:
the stacking device is arranged between the first deviation correcting device and the second deviation correcting device, the stacking device is configured to stack the unit plates and the positive electrode plates layer by layer to form a battery cell, the positive electrode plates are arranged between two adjacent layers of the unit plates; and the unit plates are at an outermost layer of the battery cell; and
the negative electrode bag-making conveying device, the first deviation correcting device, the stacking device, the second deviation correcting device and the positive electrode plate conveying device are arranged sequentially at the same predetermined intervals.
In any of the above technical solutions, further, the carrying device includes four carrying members which move synchronously;
the carrying device has a first working position and a second working position, and the carrying device reciprocates between the first working position and the second working position;
in the first working position, the four carrying members are respectively arranged facing the negative electrode bag-making conveying device, the first deviation correcting device, the stacking device and the second deviation correcting device; and
in the second working position, the four carrying members are respectively arranged facing the first deviation correcting device, the stacking device, the second deviation correcting device and the positive electrode plate conveying device.

In any of the above technical solutions, further, the carrying member includes:
a bracket;
a plurality of suction plates arranged sequentially on the bracket, wherein the suction plate is formed with an adsorption surface; and
a driving member arranged on the bracket, wherein the bracket is connected with the driving member, and the driving member is configured to drive the bracket and the suction plate to be close to or away from the first deviation correcting device, the stacking device, the second deviation correcting device or the positive electrode plate conveying device.

In any of the above technical solutions, further, the carrying member further includes a buffer member arranged between the bracket and the suction plate.

In any of the above technical solutions, further, the stacking device includes:
a fixing bottom frame;
a driving device arranged on the fixing bottom frame and provided with a driving shaft;
a support member connected with the driving shaft; and
a plurality of adsorption plates arranged on the support member.

In any of the above technical solutions, further, the stacking device further includes:
a first fixing plate and a second fixing plate arranged facing each other, wherein the support member is arranged between the first fixing plate and the second fixing plate;
a plurality of pressing blades arranged on the first fixing plate and the second fixing plate and arranged facing the adsorption plate; and
   a driving module connected with the first fixing plate and the second fixing plate and capable of driving the first fixing plate and the second fixing plate to be close to or away from each other.

In any of the above technical solutions, further, the first deviation correcting device includes:
a plurality of fixing brackets arranged at intervals;
a plurality of suction disks, wherein each of the fixing brackets is provided with one of the suction disks;
an adjustment driving member provided with a driving part, wherein the driving part is connected with the fixing bracket; and
an identification device arranged above the suction disk and arranged facing towards the suction disk.

The present application further provides a stacked product manufactured by the bag-making type stacking apparatus in any of the above technical solutions, wherein the stacked product includes a plurality of negative electrode plates and a plurality of positive electrode plates encapsulated inside a bag, one of the positive electrode plates is arranged between any two arbitrary negative electrode plates encapsulated inside the bag; and the negative electrode plates encapsulated in the bag are at the outermost layer of the stacked product.

The present application further provides another bag-making type stacking apparatus, including:
a positive electrode bag-making system including a positive electrode plate-making system and a unit plate composite bag-making system, which are arranged in a spaced manner;
a negative electrode plate-making system which is spaced apart from the positive electrode bag-making system;
a stacking device, which is spaced apart from the positive electrode bag-making system and the negative electrode plate-making system; and
a carrying device which is spaced apart from the stacking device, the carrying device being provided with a carrying member, wherein the carrying member reciprocates between the unit plate composite bag-making system, the stacking device and the positive electrode plate-making system.

In the above technical solution, further, the positive electrode plate-making system is configured to produce positive electrode plates, the positive electrode plate includes a current collector and active substances coated on the current collector, the unit plate composite bag-making system is configured to produce unit plates, the unit plate includes the positive electrode plate and an diaphragm covering the positive electrode plate, and the diaphragm covers the positive electrode plate;
the negative electrode plate-making system is configured to produce negative electrode plates, the negative electrode plate includes a current collector and active substances coated on the current collector, and the unit plate covers the negative electrode plate; and
the stacking device is configured to stack the unit plates and the negative electrode plates layer by layer to form a battery cell, the negative electrode plates are arranged between two adjacent layers of the unit plates, and the unit plates are at the outermost layer of the battery cell.

Compared with the prior art, the present application has the following beneficial effects:
the bag-making type stacking apparatus provided in the present application includes:
a negative electrode bag-making system, including a negative electrode plate-making system and a unit plate composite bag-making system which are arranged in a spaced manner; a positive electrode plate-making system spaced apart from the negative electrode bag-making system; a stacking device spaced apart from the negative electrode bag-making system and the positive electrode plate-making system; and a carrying device spaced apart from the stacking device and provided with a carrying member, wherein the carrying member reciprocates between the unit plate composite bag-making system, the stacking device and the positive electrode plate-making system.

The bag-making type stacking apparatus provided in the present application can stack a plurality of unit plates and a plurality of positive electrode plates in one instance, thereby greatly improving the stacking speed, and improving the production efficiency; and importantly, the tension change amplitude of a diaphragm is small, and the diaphragm is always kept in a properly tensioned state, in combination with the stacking operation after bag-making and plate making in advance, the probability of the occurrence of wrinkles is almost zero, thereby greatly improving the quality of stacking, and ensuring safety of the battery.

The stacked product provided in the present application is manufactured by the above bag-making type stacking apparatus, therefore, the stacked product has all the beneficial effects of the above bag-making type stacking apparatus, which will not be repeated redundantly herein.

### BRIEF DESCRIPTION OF THE DRAWINGS

To more clearly illustrate technical solutions in the embodiments of the present application or in the prior art, accompanying drawings required to be used in the description of the embodiments or the prior art will be introduced briefly below, apparently, the accompanying drawings in the following description are some embodiments of the present application, and for those skilled in the art, other accompanying drawings can be obtained according to these drawings without any creative effort.
FIG. 1 is a structural schematic diagram of a negative electrode bag-making system of a bag-making type stacking apparatus provided in embodiments of the present application;
FIG. 2 is a structural schematic diagram of a positive electrode plate-making system of a bag-making type stacking apparatus provided in embodiments of the present application;
FIG. 3 is a structural schematic diagram of a bag-making type stacking apparatus provided in embodiments of the present application;
FIG. 4 is a structural schematic diagram of a carrying device of a bag-making type stacking apparatus provided in embodiments of the present application;
FIG. 5 is a structural schematic diagram of a carrying mechanism provided in the present application;
FIG. 6 is a structural schematic diagram of a stacked product provided in embodiments of the present application;
FIG. 7 is an enlarged schematic diagram of point A in FIG. 6;
FIG. 8 is a structural schematic diagram of a carrying device provided in embodiments of the present application;
FIG. 9 is another view of a carrying device provided in embodiments of the present application;
FIG. 10 is a structural schematic diagram of a stacking device provided in embodiments of the present application;
FIG. 11 is a schematic diagram of part of the structure of a carrying device provided in embodiments of the present application;
FIG. 12 is a structural schematic diagram of a first deviation correcting device provided in embodiments of the present application;
FIG. 13 is an enlarged schematic diagram of point B in FIG. 12.

Reference numerals: 1 - negative electrode plate-making system, 101 - negative electrode blanking roll, 102 - first cutting device, 103 - first roll shaft, 2 - unit plate composite bag-making system, 201 - first diaphragm blanking roll, 202 - first diaphragm, 203 - second diaphragm blanking roll, 204 - second diaphragm, 205 - composite roll shaft, 206 - second cutting device, 207 - first detection device, 208 - negative electrode bag-making conveying device, 209 - clamping roll, 3 - positive electrode plate-making system, 301 - positive electrode blanking roll, 302 - third cutting device, 303 - second detection device, 304 - positive electrode plate conveying device, 4 - stacking device, 401 - fixing bottom frame, 402 - fixing plate, 403 - driving device, 404 - supporting plate, 405 - guiding member, 406 - pressing blade, 407 - first fixing plate, 408 - second fixing plate, 409 - first screw, 410 - first sliding block, 411 - second screw, 412 - second sliding block, 413 - rising and descending module, 414 - third fixing plate, 415 - adsorption plate, 5 - carrying device, 501 - first carrying member, 502 - second carrying member, 503 - third carrying member, 504 - fourth carrying member, 505 - fixing frame, 506 - multi-actor linear motor, 507 - first bracket, 508 - driving member, 509 - buffer member, 510 - second bracket, 6 - suction plate, 7 - first deviation correcting device, 701 - fixing bracket, 702 - suction disk, 703 - first driving motor, 704 - second driving motor, 705 - third driving motor, 706 - identification device, 8 - second deviation correcting device, a - first direction, b - second direction, 100 - unit plate, 200 - positive electrode plate, 300 - negative electrode coil, 400 - positive electrode coil, 500 - negative electrode plate.

### DETAILED DESCRIPTION

Technical solutions of the present application will be described clearly and completely below in combination with the accompanying drawings. Apparently, the described embodiments are merely a part but not all of the embodiments of the present application.

The components of the embodiments of the present application which are typically described and displayed in the accompanying drawings herein can be arranged and designed in various different configurations. Therefore, the following detailed description of the embodiments of the present application provided in the accompanying drawings is not intended to limit the scope of the claimed application, but only to represent the selected embodiments of the present application.

Based on the embodiments of the present application, all the other embodiments obtained by those skilled in the art without any creative effort shall all fall within the protection scope of the present application.

In the description of the present application, it should be noted that, the orientation or position relationship indicated by the terms "center", "upper", "lower", "left", "right", "vertical", "horizontal", "inside" and "outside" is the orientation or position relationship shown based on the drawings, which are merely for the convenience of describing the present application and simplifying the description, rather than indicating or implying that the device or element referred to must have a specific orientation, or be constructed and operated in a specific orientation. Therefore, the terms cannot be understood as a limitation of the present application. In addition, the terms "first", "second" and "third" are only for descriptive purpose and cannot be understood as indicating or implying relative importance.

In the description of the present application, it should be noted that unless otherwise specified and limited, the terms "install", "connected" and "connection" should be understood in a broad sense, for example, the connection can be a fixed connection, a detachable connection, or an integrated connection; the connection can be a mechanical connection or an electrical connection; the connection can be direct connection, indirect connection through an intermediate medium, or internal communication between two elements. For those skilled in the art, specific meanings of the above terms in the present application can be understood based on specific circumstances.

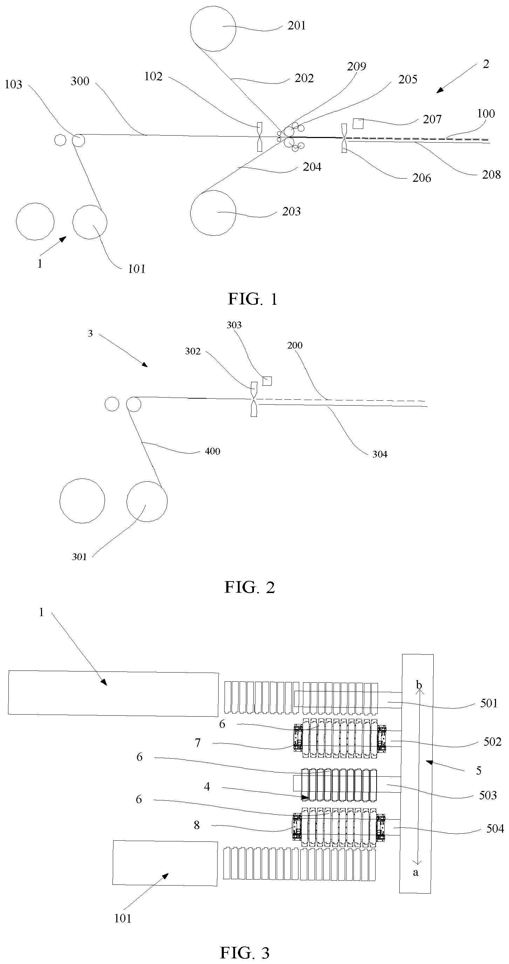

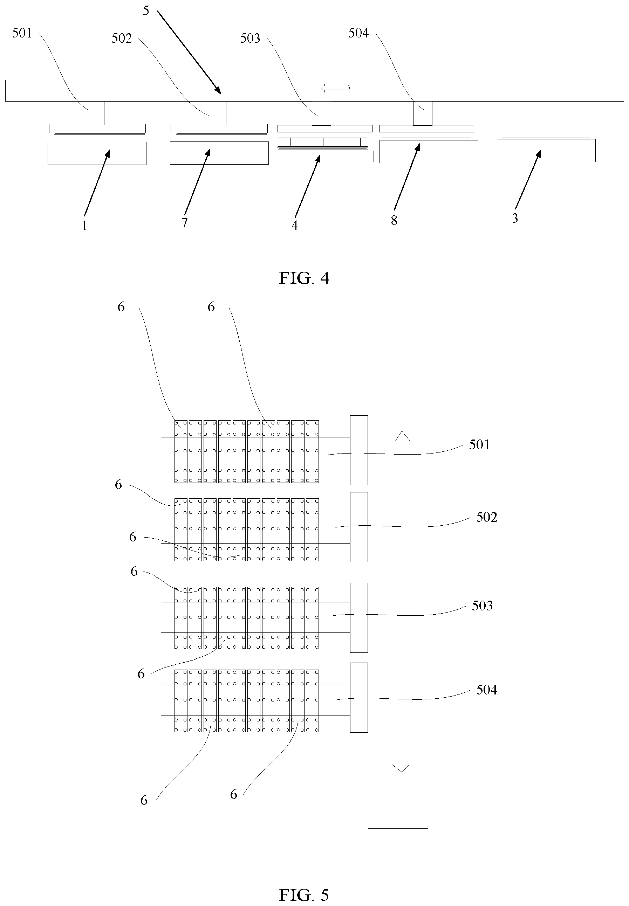

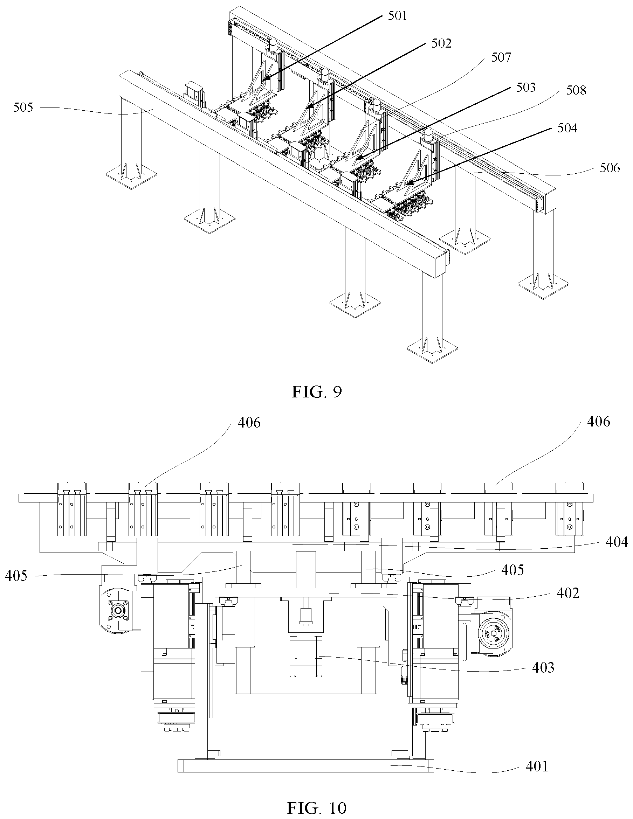

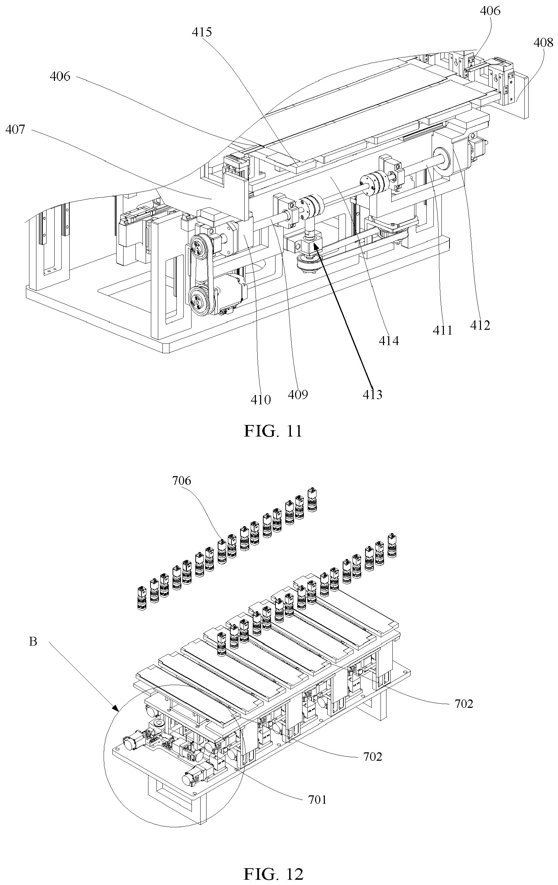

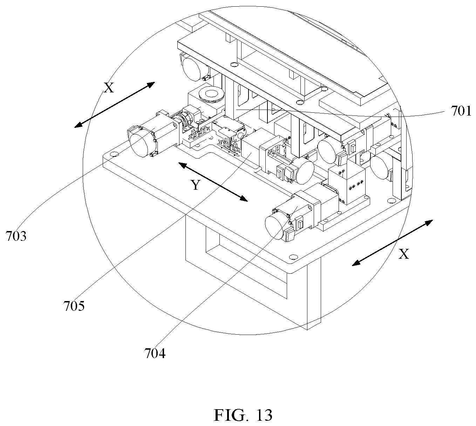

The bag-making type stacking apparatus and the stacked product of the embodiments of the present application will be described below with reference to FIG. 1 to FIG. 13.

### Embodiment I

### (I) First aspect

With reference to FIGs. 1 to 13, Embodiment I of the present application provides a bag-making type stacking apparatus, including: a negative electrode bag-making system, a positive electrode plate-making system 3, a stacking device 4 and a carrying device 5, the negative electrode bag-making system is configured to manufacture the negative electrode plate 500 into a unit plate 100 which is encapsulated in an upper and a lower layer of diaphragms to form a bag structure, the carrying device 5 carries the positive electrode plate 200 and the unit plate 100 to the stacking device 4 and stacks on the stacking device 4, to obtain a battery cell arranged in an order of "diaphragm, negative electrode, diaphragm, positive electrode, diaphragm, negative electrode, diaphragm, positive electrode", and specific structures and working principles of each system of the bag-making type stacking apparatus will be introduced specifically below.

The negative electrode bag-making system includes a negative electrode plate-making system 1 and a unit plate composite bag-making system 2, wherein the negative electrode plate-making system 1 includes a negative electrode blanking roll 101, a first roll shaft 103 and a first cutting device 102 which are arranged sequentially, the negative electrode blanking roll 101 is wound with a negative electrode coil 300, and the negative electrode coil 300 has a sheet-like structure as a whole.

Preferably, the first cutting device 102 is arranged between the negative electrode blanking roll 101 and the unit plate composite bag-making system 2, preferably, the first cutting device 102 is arranged to be close to the unit plate composite bag-making system 2, the first cutting device 102 includes an upper and a lower blade, the negative electrode coil 300 penetrates between the upper and lower blades, when the two blades are close to each other, the two blades can cut off the negative electrode coil 300, and the first cutting device 102 cuts periodically according to a preset decision, so as to cut the sheet-shaped negative electrode coil 300 into a plurality of negative electrode plates 500 which are spaced apart with the same specification, and under the effect of the subsequent unit plate composite bag-making system 2, the negative electrode plates 500 after cutting can be conveyed to the unit plate composite bag-making system 2. Wherein the negative electrode plate 500 includes a current collector and the current collector is uniformly coated with active substances, the current collector of the negative electrode plate 500 can include but is not limited to copper foil and carbon coated copper foil, and active substances coated on the current collector of the negative electrode plate 500 includes at least one of graphite material and a composite material of graphite and silica (such as silica carbon).

Preferably, the negative electrode plate-making system 1 further includes a first roll shaft 103, the first roll shaft 103 is arranged between the negative electrode blanking roll 101 and the first cutting device 102, and the first roll shaft 103 can enable smooth conveying of the negative electrode coil 300, can change the advancing direction of the negative electrode coil 300, and can ensure the tightening effect of the negative electrode coil 300.

Preferably, the unit plate composite bag-making system 2 includes a first diaphragm blanking roll 201, a second diaphragm blanking roll 203 and a composite roll shaft 205, the composite roll shaft 205 can be a hot compression roll in the prior art, the first diaphragm blanking roll 201 and the second diaphragm blanking roll 203 are symmetrically arranged at an upper and a lower side of the negative electrode coil 300, respectively, the first diaphragm blanking roll 201 is wound with a first diaphragm 202, the second diaphragm blanking roll 203 is wound with a second diaphragm 204, and each end, which extends freely relative to the first diaphragm blanking roll 201 and the second diaphragm blanking roll 203, of the first diaphragm 202 and the second diaphragm 204 passes through the composite roll shaft 205.

The composite roll shaft 205 includes an upper roll shaft and a lower roll shaft, an application channel is formed between the upper roll shaft and the lower roll shaft, the negative electrode plate 500 which is cut to be shaped, the first diaphragm 202 and the second diaphragm 204 pass through the application channel simultaneously, moreover, the first diaphragm 202 is located on an upper surface of the negative electrode plate 500, the second diaphragm 204 is located on a lower surface of the negative electrode plate 500, under the hot compression effect of the composite roll shaft 205, the first diaphragm 202 is attached to the upper surface of the plurality of electrode plates, the second diaphragm 204 is attached to the lower surface of the plurality of electrode plates, such that the plurality of negative electrode plates 500 which are spaced apart are separated and encapsulated as a whole by the first diaphragm 202 and the second diaphragm 204.

Preferably, the unit plate composite bag-making system 2 further includes a second cutting device 206, a first detection device 207 and a negative electrode bag-making conveying device 208. In the plurality of encapsulated negative electrode plates 500, part of the first diaphragm 202 and the second diaphragm 204 between two adjacent negative electrode plates 500 are bonded, along with continuous operation of each roll shaft, the plurality of negative electrode plates 500 after encapsulation gradually pass through the second cutting device 206, the second cutting device 206 also includes an upper and a lower blade, preferably an electro-thermal blade, moreover, the upper and lower electro-thermal blades of the second cutting device 206 enable the second cutting device 206 to cut at the position in which the first diaphragm 202 is bonded with the second diaphragm 204 and enable the cutting position to be subjected to thermoplastic sealing while the cutting position is heated and fractured, such that a plurality of continuously encapsulated negative electrode plates 500 form a plurality of independently encapsulated unit plates 100, that is, the unit plate 100 includes a negative electrode plate 500 and an diaphragm (a first diaphragm 202 and a second diaphragm 204) covering the negative electrode plate 500, wherein the diaphragm is formed by a base film and a polymer coated on the surface of the base film, The base film has good tensile and tear resistance properties as well as thermal stability. The polymer has strong adhesion and ion conductivity. Among them, the base film can be made of polypropylene or polyethylene, and the polymer can include but is not limited to ceramics, acrylic ester, acrylic ammonium, acrylic sodium, CMC, polyvinylidene fluoride and carboxymethylcellulose sodium. During the process of thermoplastic sealing on both sides of the negative electrode plate 500, the upper and lower diaphragms can be automatically tensioned, thereby further effectively avoiding the formation of wrinkles on the upper and lower surfaces of the negative electrode plate 500 while the first diaphragm 202 and the second diaphragm 204 remain in a tensioned state.

Preferably, the diaphragm and the negative electrode plate 500 can be bonded together through methods such as hot melting, static electricity and compressive combination, to ensure the bonding effect and tightness between the diaphragm and the negative electrode plate 500. Ideally, the length, width and other sizes of the diaphragm are greater than those of the negative electrode plate 500 to ensure the covering effect of the diaphragm on the negative electrode plate 500.

Preferably, a clamping roll 209 is arranged between the first cutting device 102 and the composite roll shaft 205, such that the clamping roll 209 can clamp the negative electrode plate 500 at the first time after the first cutting device 102 cuts off the negative electrode coil 300 to obtain the negative electrode plate 500, preferably, the crack of the clamping roll 209 and the application channel are at the same horizontal line, to improve the centering effect between the negative electrode plate 500 and the composite roll shaft 205, and ensure smooth conveyance of the negative electrode plate 500 to the composite roll shaft 205.

Preferably, the first detection device 207 is preferably a visual detection device, and can be a CCD camera, a detection head of the first detection device 207 faces towards a single unit plate 100 after encapsulation, to detect encapsulation quality and existence of wrinkles on the upper and lower surfaces, preferably, a rejection device is arranged between the first detection device 207 and the negative electrode plate bag-making conveying device 208, the rejection device can include but is not limited to a mechanical hand, defective products detected by the first detection device 207 are rejected by the rejection device, and qualified products are conveyed to the next process by the negative electrode bag-making conveying device 208.

Preferably, the positive electrode plate-making system 3 includes a positive blanking roll 301, a third cutting device 302, a second detection device 303 and a positive electrode plate conveying device 304, the positive blanking roll 301 is wound with a sheet-shaped positive coil 400, one end, freely extending relative to the positive blanking roll 301, of the positive coil 400 extends towards the third cutting device 302 and is clamped by the third cutting device 302, the third cutting device 302 has the same structure as the first cutting device 102, and has an upper and a lower blade, when the upper and lower blades are close to each other to perform the cutting operation, the sheet-shaped positive coil 400 can be cut off to obtain a plurality of positive electrode plates 200, subsequently, the plurality of positive electrode plates 200 are detected by the second detection device 303 in sequence, and the second detection device 303 is preferably a CCD camera. Wherein the positive electrode plate 200 includes a current collector and active substances uniformly coated on the current collector, the current collector of the positive electrode plate 200 includes but is not limited to an aluminum foil and a carbon coated aluminum foil, and the active substance coated on the current collector of the positive electrode plate 200 includes at least one of the nickel, cobalt and manganese ternary materials (811, 712, 613, etc.), the nickel, cobalt, manganese and aluminum quaternary materials, a cobalt-free material, the lithium iron phosphate material, the lithium manganese iron phosphate material, the sodium ion positive electrode material, etc. It should be noted that, the size of the negative electrode plate 500 in a single unit plate 100 is greater than the size of the positive electrode plate 200, the size of the diaphragm is greater than the size of the negative electrode plate 500, to ensure that the two layers of unit plates 100 can completely cover the positive electrode plates 200 between the two layers of unit plates 100, and the unit plates 100 and the positive electrode plates 200 are stacked layer by layer according to this rule, such that a layer of positive electrode plates 200 are stacked between any two arbitrary layers of unit plates 100 to form a battery cell, unit plates 100 are at the outmost layer (that is, the uppermost layer and the lowermost layer) of the battery cell, and the unit plates 100 at the outermost layer can completely cover the adjacent positive electrode plates 200.

Preferably, a rejection device is also arranged between the second detection device 303 and the positive electrode plate conveying device 304, defective products detected by the second detection device 303 are rejected by the rejection device, and qualified products detected by the second detection device 303 are conveyed to the next process by the positive electrode plate conveying device 304.

Preferably, the bag-making type stacking apparatus provided in the present application further provides a first deviation correcting device 7, a second deviation correcting device 8, a stacking device 4 and a carrying device 5, the carrying device 5 includes four carrying members which are respectively a first carrying member 501, a second carrying member 502, a third carrying member 503 and a fourth carrying member 504, a plurality of suction plates 6 are arranged on each carrying member, the number of the suction plates 6 is N, wherein N is a positive integer, preferably, N is greater than 2, and four carrying members move synchronously.

Preferably, the carrying device 5 further includes a fixing frame 505, the carrying member and the driving member 508 are both arranged on the fixing frame 505, specifically, the fixing frame 505 includes a first fixing arm and a second fixing arm arranged to be in parallel with each other, a driving motor is respectively arranged in a sliding manner at the wall surfaces, facing each other mutually, of the first fixing arm and the second fixing arm, the driving motor is preferably a multi-actor linear motor 506, the multi-actor linear motor 506 includes a linear sliding rail and a sliding plate which can move relative to the linear sliding rail, the number of the sliding plates on each linear guide rail is the same as the number of the carrying members, preferably, the number of the sliding plates is four, and eight sliding plates are available in total.

Preferably, the carrying member includes a first bracket 507 and a second bracket 510 which are arranged symmetrically, wherein the first bracket 507 includes a first plate part and a second plate part which are vertical to each other, the second bracket 510 includes a third plate part and a fourth plate part which are vertical to each other, the first plate part extends along a vertical direction and is in sliding connection with the sliding plate on the linear guide rail, the second plate part extends along a horizontal direction, the second plate part is adjacent towards the fourth plate part, the third plate part is arranged facing towards the first plate part, and is in sliding connection with the sliding plate on the linear guide rail.

Preferably, a driving member 508 is arranged on each sliding plate, the driving member 508 can be a driving motor or a cylinder, the driving member 508 acts on the first plate part and the third plate part, to drive the first bracket 507 and the second bracket 510 to rise and descend relative to the first fixing part and the second fixing part, respectively.

Preferably, N/2 connecting plates are respectively arranged below the second plate part and the fourth plate part, such that N connecting plates in total are arranged below the second plate part and the fourth plate part, and one suction plate 6 is connected to each connecting plate through a buffer member 509, the suction plate 6 is provided with a plurality of air holes, during operation, the air hole is pumped to move to the lower surface of the suction plate 6 to form a negative pressure, such that the suction plate 6 can adsorb the unit plate 100 or the positive electrode plate 200.

Preferably, the carrying device 5 further includes a vacuum generator (not shown in the figure), the vacuum generator is provided with an air exhaust opening, the air exhaust opening is communicated with the air hole on the suction plate 6 of the carrying member, to form a negative pressure on the lower surface of the suction plate 6.

Preferably, the number of the buffer members 509 is multiple, each buffer member 509 includes a plurality of linear bearings which penetrate through the connecting plate, one end of the linear bearing penetrates through the connecting plate or penetrates through the connecting plate and is located on the lower surface of the connecting plate and is provided with a spring, such that buffer can occur when the suction plate 6 moves downwards to adsorb the unit plate 100 or the positive electrode plate 200, to avoid adsorbing the unit plate 100 or the positive electrode plate 200.

Each carrying member is provided with a plurality of suction plates 6, such that the carrying device 5 can transfer a plurality of unit plates 100 and a plurality of positive electrode plates 200 in one instance, thereby greatly improving the working efficiency of the present bag-making type stacking apparatus, moreover, a plurality of suction plates 6 on each carrying member are arranged in sequence along a direction vertical to the carrying direction of the carrying member, the spacing between four carrying members is fixed, that is, the carrying distance of each carrying action is unchanged, when the number of workpieces which can be grabbed by each carrying member in one instance needs to be increased, the number of the suction plates 6 needs to be increased, moreover, the carrying distance of each carrying member does not need to be adjusted, the working efficiency can be improved easily without improving and adjusting the structure of the present bag-making type stacking apparatus, therefore, the present bag-making type stacking apparatus has strong convenience and practicability.

Preferably, the stacking device 4 includes a fixing bottom frame 401, the fixing bottom frame 401 is provided with a fixing plate 402, the fixing plate 402 is provided with a driving device 403, the driving device 403 can be a motor, of course, the driving motor 403 is not limited hereto, the driving device 403 is provided with a driving shaft, the driving shaft penetrates through the fixing plate 402 and is located above the fixing plate 402, moreover, the driving shaft is connected with a supporting plate 404, the supporting plate 404 is provided with N adsorption plates 415 configured to adsorb to fix the positive electrode plates 200 or the unit plates 100, the adsorption plate 415 can rise and descend along with the supporting plate 404 under the effect of the driving device 403, such that when a stacking operation is performed, the carrying device 5 carries N positive electrode plates 200 (or unit plates 100) and places on the adsorption plate 415 to be stacked with the unit plates 100 (or the positive electrode plates 200) on the adsorption plate 415, the driving device 403 can drive the adsorption plate 415 to rise to be aligned with and be in contact with the positive electrode plates 200 (or the unit plates 100) on the carrying device 5, subsequently, one stacking is completed after the carrying device 5 releases the positive electrode plates 200 (or the unit plates 100), and so on.

Preferably, a guiding member 405 is connected to the upper surface of the fixing plate 402, preferably, the number of the guiding members 405 is two groups, the two groups of guiding members 405 are symmetrically arranged at two sides of the driving shaft, respectively, the guiding member 405 includes a guiding sleeve and a linear bearing, the guiding sleeve is arranged on an upper surface of the fixing plate 402, and one end of the linear bearing is arranged at the other end of the guiding shaft of the guiding sleeve and is connected to a bottom wall surface of the supporting plate 404.

Preferably, the stacking device 4 further includes a pressing blade 406 and a driving module configured to drive the pressing blade 406 to rise or descend and open or close, the stacking device 4 further includes a first fixing plate 407 and a second fixing plate 408 configured to fix the pressing blade 406, two sides, arranged along a length direction of the positive electrode plate 200 or the unit plate 100, of the first fixing plate 407 and the second fixing plate 408 are respectively vertically arranged upwards, the first fixing plate 407 is taken as an example for illustration, N protrusions are formed at intervals along the length direction of the long side of the first fixing plate 407, an inner wall surface of each protrusion is provided with a cylinder, an output part of the cylinder is provided with a sliding rail, a sliding block connected with the sliding rail is arranged at the tail part of the pressing blade 406, a head end, relative to a tail end, of the pressing blade 406 extends towards the second fixing plate 408, such that the pressing blade 406 can be located above the positive electrode plate 200 or the unit plate 100, moreover, the pressing blade 406 can slide left and right in the length direction of the first fixing plate 407 to adjust the position of the pressing blade 406 relative to the positive electrode plate 200 or the unit plate 100. The second fixing plate 408 is in a similar way, N pressing blades on the second fixing plate 408 extend towards the first fixing plate 407 and can move left and right along a length direction of the second fixing plate 408, which will be understood by those skilled in the art, and will not be repeated redundantly herein.

The driving module includes an opening and closing module and a rising and descending module 413, the opening and closing module includes a first driving member and a second driving member, the first driving member includes a first screw 409, a first sliding block 410 and a first driving piece configured to drive the first screw 409 to rotate, the first sliding block 410 is connected with the first fixing plate 407, after the first driving screw rotates, the first sliding block 410 drives the first fixing plate 407 to move along the length direction of the positive electrode plate 200 (or the unit plate 100), such that the pressing blade 406 on the first fixing plate 407 can be close to or away from the positive electrode plate 200 (or the unit plate 100), similarly, the second driving member includes a second screw 411, a second sliding block 412 and a second driving piece configured to drive the second screw 411 to rotate, the second sliding block 412 is connected to the second fixing plate 408, to drive the second fixing plate 408 and the pressing blade 406 on the second fixing plate 408 to be relatively close to or away from the positive electrode plate 200 (or the unit plate 100).

Preferably, the rotational direction of the first screw is opposite to the rotational direction of the second screw 411, such that the two moves to be close to or away from each other, to realize opening and closing actions of the pressing blade 406 on the first fixing plate 407 and the pressing blade 406 on the second fixing plate 408.

The rising and descending module 413 includes a third driving member and a fourth driving member, wherein the third driving member includes a third fixing plate 414 and a third driving piece, the fourth driving member includes a fourth fixing plate 402 and a fourth driving piece, the third fixing plate 414 and the third fixing plate 414 are arranged to face each other and extend along a length direction of the positive electrode plate 200 (or the unit plate 100), the third fixing plate 414 and the fourth fixing plate 402 are respectively connected with the first fixing plate 407 and the second fixing plate 408, and the third driving piece and the fourth driving piece simultaneously drive the first fixing plate 407 and the second fixing plate 408 to rise and descend in a vertical direction, such that the pressing blade 406 can rise and descend relative to the positive electrode plate 200 (or the unit plate 100).

Through opening or closing and rising or descending of the double rows of pressing blades 406, the positive electrode plate 200 (or the unit plate 100) can be tightened, or in the stacking process, the double rows of pressing blades 406 are disengaged from the positive electrode plate 200 (or the unit plate 100) to expose the space above the positive electrode plate 200 (or the unit plate 100) to perform the stacking operation.

Preferably, the first deviation correcting device 7 includes N fixing brackets 701 distributed sequentially, N suction discs 702 with a flat plate structure and configured to correspondingly adsorb N positive electrode plates 200 (or unit plates 100), and N groups of adjustment driving members, one suction disc 702 is arranged on each fixing bracket 701, the adjustment driving member includes a first driving motor 703, a second driving motor 704 and a third driving motor 705, the third driving motor 705 is arranged between the first driving motor 703 and the second driving motor 704, the first driving motor 703 is provided with a first driving part, the second driving motor 704 is provided with a second driving part, the third driving motor 705 is provided with a third driving part, and the three driving parts are all connected with the fixing bracket 701, specifically, the driving direction of the first driving motor 703 and the second driving motor is an X direction, the driving direction of the third driving motor 705 is a Y direction, the first driving motor 703 and the second driving motor 704 respectively perform deviation correction on the fixing bracket 701 in the X direction at two ends, and the third driving motor 705 performs deviation correction on the fixing bracket 701 in the Y direction, to adjust an included angle between the X direction and the Y direction, and ensure that N positive electrode plates 200 (or unit plates 100) are distributed along the same straight line and are arranged to be in parallel, moreover, the spacing between two adjacent positive electrode plates 200 (or unit plates 100) is the same, the positive electrode plates 200 (or the unit plates 100) are arranged to be opposite to each other on each suction disc 702, to ensure that the positive electrode plates 200 (or the unit plates 100) can directly correspond to N adsorption plates 415 on the stacking device 4 after the carrying member carries the positive electrode plates 200 (or the unit plates 100) on the suction disc 702 to the stacking device 4, to ensure stacking precision and quality.

Ideally, a positioning reference is arranged below the suction disc 702, an identification device 706 is arranged above the fixing bracket 701, the identification device 706 can be a CCD camera, a sensor, etc. The identification device 706 is configured to detect the deviation between the positive electrode plate 200 (or the unit plate 100) and the positioning reference, the three driving motors of the adjustment driving member are respectively adjusted adaptively according to detection results of the identification device 706.

For the structure and working principle of the second deviation correcting device 8, please refer to the first deviation correcting device 7, which can be completely understood by those skilled in the art, and will not be repeated redundantly herein.

As shown in FIG. 3, the negative electrode bag-making system, the first deviation correcting device 7, the stacking device 4, the second deviation correcting device 8 and the positive electrode plate-making system 3 are sequentially distributed on the same side of the carrying device 5 according to the same spacing, specifically speaking, the negative electrode bag-making conveying device 208, the first deviation correcting device 7, the stacking device 4, the second deviation correcting device 8 and the positive electrode plate conveying device 304 are sequentially distributed along the same side of the carrying device 5.

When the carrying device 5 performs a carrying task, an initial state is firstly prepared, for example, the first carrying member 501 is located above the negative electrode bag-making conveying device 208 and is arranged to be opposite to the negative electrode bag-making conveying device 208, the second carrying member 502 is located above the first deviation correcting device 7 and is arranged to be opposite to the first deviation correcting device 7, the third carrying member 503 is located above the stacking device 4 and is arranged to be opposite to the stacking device 4, the fourth carrying member 504 is located above the second deviation correcting device 8 and is arranged to be opposite to the positive electrode plate conveying device 304, at this time, N suction plates 6 of the first carrying member 501 absorb N unit plates 100 on the negative electrode bag-making conveying device 208, the second carrying member 502 absorbs N unit plates 100 on the first deviation correcting device 7, the stacking device 4 is in an unloaded state, the third carrying member 503 is unloaded correspondingly, the fourth carrying member 504 absorbs a plurality of positive electrode plates 200 on the second deviation correcting device 8, subsequently four carrying members simultaneously move by a predetermined spacing towards the first direction a, such that the first carrying member 501 is arranged to be opposite to the first deviation correcting device 7, the second carrying member 502 is arranged to be opposite to the stacking device 4, the third carrying member 503 is opposite to the second deviation correcting device 8, to grab N positive electrode plates 200 on the second deviation correcting device 8, the fourth carrying member 504 is opposite to the positive electrode plate conveying device 304 to absorb N positive electrode plates 200 on the positive electrode plate conveying device 304, subsequently, each carrying member releases its own load, therefore, N unit plates 100 on the negative electrode bag-making conveying device 208 are carried to the first deviation correcting device 7 and N unit plates 100 which are subjected to deviation correction on the first deviation correcting device 7 are carried to the stacking device 4.

Then four carrying members move by a preset spacing towards a second direction b, such that N positive electrode plates 200 absorbed by the third carrying member 503 and subjected to deviation correction by the second deviation correcting device 8 are stacked above N unit plates 100, the fourth carrying member 504 places the positive electrode plates 200 absorbed on the positive electrode plate conveying device 304 on the second deviation correcting device 8 for deviation correction, the four carrying members reciprocate on the stacking device according to the above rule for a stacking operation.

It can be seen that, when the bag-making stacking apparatus provided in the present application is used, a plurality of unit plates and positive electrode plates can be stacked in one instance, to greatly improve the stacking speed and improve the production efficiency, and importantly, the tension change amplitude of a diaphragm is small, and the diaphragm is always kept in a properly tensioned state, in combination with the stacking operation after bag-making and plate making in advance, the probability of the occurrence of wrinkles is almost zero, products obtained from actual processing have no wrinkles, thereby greatly improving the quality of stacking, ensuring safety of the battery, avoiding thermal runaway caused by diaphragm contraction, and ensuring battery safety. In addition, as to the bag-making stacking apparatus provided in the present application, when more plates are stacked, the stacking distance is unchanged, and the stacking efficiency is further quickened.

### (II) Second aspect

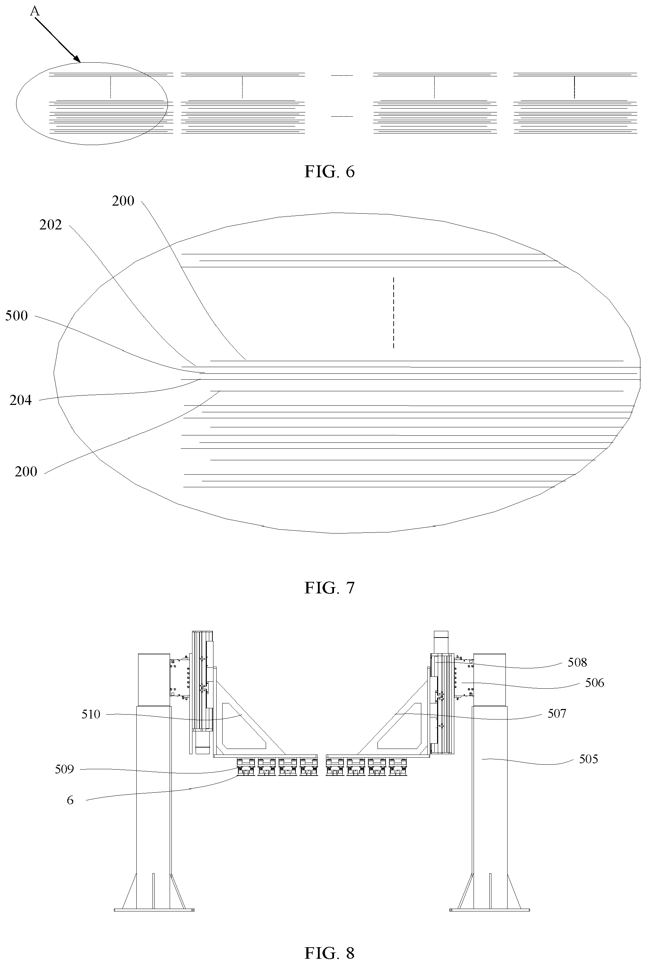

As shown in FIGs. 6 and 7, Embodiment I of the present application further provides a stacked product, specifically a battery cell product which is processed by the bag-making stacking apparatus provided in the above embodiment. The stacked product obtained from stacking by the bag-making stacking apparatus provided in the above embodiment is stacked from top to bottom according to a rule of one layer of negative electrode plates 500 encapsulated in the bag, one layer of positive electrode plates 200, one layer of negative electrode plates 500 encapsulated in the bag, and one layer of positive electrode plates 200, the negative electrode plates 500 are encapsulated by a diaphragm, such that the upper and lower surfaces of each negative electrode plate 500 are respectively coated with a first diaphragm 202 and a second diaphragm 204, one surface, deviating from the negative electrode plate 500, of the first diaphragm 202 is bonded with one positive electrode plate 200, one surface, deviating from the negative electrode plate 500, of the second diaphragm 204 is bonded with another positive electrode plate 200. Compared with traditional Z-shaped stacking manner, the stacked product obtained through bagging the negative electrode plate 500 in advance and attaching the diaphragm to the positive electrode plate 200 has no wrinkled diaphragms, thereby avoiding battery shortage caused by wrinkles, moreover, negative electrode plates 500 encapsulated in the bag are at the outermost layer of the stacked product, the size (length, width) of the negative electrode plate 500 is greater than the size of the positive electrode plate 200, and the size of the bag outside the negative electrode plate 500 is also greater than the size of the negative electrode plate 500, such that the bag can completely cover the negative electrode plate 500, and the negative electrode plate 500 can completely cover the positive electrode plate 200.

### Embodiment II

Embodiment II of the present application provides another bag-making type stacking apparatus (not shown in the figure). The bag-making type stacking apparatus includes a positive electrode bag-making system, a negative electrode plate-making system, a stacking device and a carrying device, wherein the stacking device and the carrying device in Embodiment II have the same structure and working principle as the stacking device and the carrying device in Embodiment I, specifically speaking, another bag-making stacking apparatus in Embodiment II can be obtained through exchanging the positions of the negative blanking roll and the positive blanking roll and changing the processing manner of "negative electrode bag-making and positive electrode bag-making" into "positive electrode bag-making and negative electrode bag-making" in Embodiment I, as to the setting manner, structure and working principle of the positive electrode bag-making system, the negative electrode plate-making system, the stacking device and the carrying device in the present embodiment, please refer to the content in the above Embodiment I, which can be completely understood by those skilled in the art and will not be repeated redundantly herein.

In addition, correspondingly, another stacked product (not shown in the figure) obtained through processing by the bag-making type stacking apparatus provided in Embodiment II is stacked from top to bottom according to the rule of one layer of positive electrode plates encapsulated in the bag, one bag of negative electrode plates, one bag of positive electrode plates encapsulated in the bag and one layer of negative electrode plates, the bag of the positive electrode plate is formed through encapsulation by a diaphragm, such that the upper and lower surfaces of each positive electrode plate is respectively coated with a diaphragm, one surface, deviating from the positive electrode plate, of the diaphragm is bonded with the negative electrode plate. Such a stacked product also has the advantage of no existence of wrinkled diaphragms.

Finally, it should be noted that, each of the above embodiments is merely for illustrating rather than limiting technical solutions of the present application; although the present application has been described in detail with reference to each of the above embodiments, those skilled in the art should understand that, technical solutions recorded in each of the above embodiments can still be modified, or part or all of the technical features can be substituted equivalently, while these modifications or substitutions will not enable the spirit of the corresponding technical solutions to depart from the scope of the technical solutions of each embodiment of the present application.

### INDUSTRIAL APPLICABILITY

The bag-making type stacking apparatus and the stacked product provided in the present application can stack a plurality of unit plates and a plurality of positive electrode plates in one instance, thereby greatly improving the stacking speed, and improving the production efficiency; and importantly, the tension change amplitude of a diaphragm is small, and the diaphragm is always kept in a properly tensioned state, in combination with the stacking operation after bag-making and plate making in advance, the probability of the occurrence of wrinkles is almost zero, thereby greatly improving the quality of stacking, and ensuring safety of the battery.

## Claims

1. A bag-making type stacking apparatus, comprising:
a negative electrode bag-making system, comprising a negative electrode plate-making system and a unit plate composite bag-making system, which are arranged in a spaced manner;
a positive electrode plate-making system which is spaced apart from the negative electrode bag-making system;
a stacking device, which is spaced apart from the negative electrode bag-making system and the positive electrode plate-making system; and
a carrying device which is spaced apart from the stacking device, the carrying device being provided with a carrying member, wherein the carrying member reciprocates between the unit plate composite bag-making system, the stacking device and the positive electrode plate-making system.

2. The bag-making type stacking apparatus of claim 1, wherein the negative electrode plate-making system comprises:
a negative electrode blanking roll wound with negative electrode coils;
a first cutting device arranged between the negative electrode blanking roll and the unit plate composite bag-making system, wherein the first cutting device is configured to cut the negative electrode coils into negative electrode plates, and the unit plate composite bag-making system is configured to produce unit plates;
the negative electrode plate comprises a current collector coated with active substances, wherein the unit plate contains the negative electrode plate and an diaphragm covering the negative electrode plate; the diaphragm covers the negative electrode plate; and the diaphragm contains a base film and a polymer coated on the surface of the base film; and
a first roll shaft arranged between the negative electrode blanking roll and the first cutting device.

3. The bag-making type stacking apparatus of claim 2, wherein the unit plate composite bag-making system comprises:
a first diaphragm blanking roll wound with a first diaphragm;
a second diaphragm blanking roll arranged to be symmetrical to the first diaphragm blanking roll and wound with a second diaphragm; and
a composite roll shaft formed with an application channel, wherein the negative electrode plate, the first diaphragm and the second diaphragm pass through the application channel, and the negative electrode plate is located between the first diaphragm and the second diaphragm.

4. The bag-making type stacking apparatus of claim 3, wherein the unit plate composite bag-making system further comprises a second cutting device which is spaced apart from the composite roll shaft in an advancing direction of the negative electrode plate, and the second cutting device is configured to cut off the first diaphragm and the second diaphragm arranged between any two arbitrary adjacent negative electrode plates.

5. The bag-making type stacking apparatus of claim 4, wherein the unit plate composite bag-making system further comprises:
a first detection device;
a negative electrode bag-making conveying device, wherein the second cutting device, the first detection device and the negative electrode bag-making conveying device are arranged at intervals in the advancing direction of the electrode negative electrode plate.

6. The bag-making type stacking apparatus of claim 5, wherein the positive electrode plate-making system comprises:
a positive electrode blanking roll wound with positive electrode coils; and
a third cutting device arranged at intervals with the positive electrode blanking roll in an advancing direction of the positive electrode coils and configured to cut the positive electrode coils into positive electrode plates, wherein the positive electrode plate comprises the current collector and the active substances coated on the current collector, and the unit plate covers the positive electrode plate.

7. The bag-making type stacking apparatus of claim 6, wherein the positive electrode plate-making system further comprises:
a second detection device; and
a positive electrode plate conveying device, wherein the third cutting device, the second detection device and the positive electrode plate conveying device are sequentially arranged at intervals in the advancing direction of the positive electrode plate.

8. The bag-making type stacking apparatus of claim 7, wherein the bag-making type stacking apparatus further comprises:
a first deviation correcting device which is spaced apart from the negative electrode bag-making conveying device;
a second deviation correcting device which is spaced apart from the positive electrode plate conveying device; and
the first deviation correcting device and the second deviation correcting device are located between the negative electrode bag-making conveying device and the positive electrode plate conveying device.

9. The bag-making type stacking apparatus of claim 8, wherein the bag-making type stacking apparatus further comprises:
the stacking device is arranged between the first deviation correcting device and the second deviation correcting device, the stacking device is configured to stack the unit plates and the positive electrode plates layer by layer to form a battery cell, the positive electrode plates are arranged between two adjacent layers of the unit plates; and the unit plates are at an outermost layer of the battery cell; and
the negative electrode bag-making conveying device, the first deviation correcting device, the stacking device, the second deviation correcting device and the positive electrode plate conveying device are arranged sequentially at the same predetermined intervals.

10. The bag-making type stacking apparatus of claim 9, wherein the carrying device comprises four carrying members which move synchronously;
the carrying device has a first working position and a second working position, and the carrying device reciprocates between the first working position and the second working position;
in the first working position, the four carrying members are respectively arranged facing the negative electrode bag-making conveying device, the first deviation correcting device, the stacking device and the second deviation correcting device; and
in the second working position, the four carrying members are respectively arranged facing the first deviation correcting device, the stacking device, the second deviation correcting device and the positive electrode plate conveying device.

11. The bag-making type stacking apparatus of claim 10, wherein the carrying member comprises:
a bracket;
a plurality of suction plates arranged sequentially on the bracket, wherein the suction plate is formed with an adsorption surface; and
a driving member arranged on the bracket, wherein the bracket is connected with the driving member, and the driving member is configured to drive the bracket and the suction plate to be close to or away from the first deviation correcting device, the stacking device, the second deviation correcting device or the positive electrode plate conveying device.

12. The bag-making type stacking apparatus of claim 11, wherein the carrying member further comprises a buffer member arranged between the bracket and the suction plate.

13. The bag-making type stacking apparatus of claim 9, wherein the stacking device comprises:
a fixing bottom frame;
a driving device arranged on the fixing bottom frame and provided with a driving shaft;
a support member connected with the driving shaft; and
a plurality of adsorption plates arranged on the support member.

14. The bag-making type stacking apparatus of claim 13, wherein the stacking device further comprises:
a first fixing plate and a second fixing plate arranged facing each other, wherein the support member is arranged between the first fixing plate and the second fixing plate;
a plurality of pressing blades arranged on the first fixing plate and the second fixing plate and arranged facing the adsorption plate; and
a driving module connected with the first fixing plate and the second fixing plate and capable of driving the first fixing plate and the second fixing plate to be close to or away from each other.

15. The bag-making type stacking apparatus of claim 8, wherein the first deviation correcting device comprises:
a plurality of fixing brackets arranged at intervals;
a plurality of suction disks, wherein each of the fixing brackets is provided with one of the suction disks;
an adjustment driving member provided with a driving part, wherein the driving part is connected with the fixing bracket; and
an identification device arranged above the suction disk and arranged facing towards the suction disk.

16. A stacked product manufactured by the bag-making type stacking apparatus of any one of claims 1-15, wherein
the stacked product comprises a plurality of negative electrode plates and a plurality of positive electrode plates encapsulated inside a bag, one of the positive electrode plates is arranged between any two arbitrary negative electrode plates encapsulated inside the bag; and the negative electrode plates encapsulated in the bag are at the outermost layer of the stacked product.

17. A bag-making type stacking apparatus, comprising:
a positive electrode bag-making system, comprising a positive electrode plate-making system and a unit plate composite bag-making system, which are arranged in a spaced manner;
a negative electrode plate-making system which is spaced apart from the positive electrode bag-making system;
a stacking device, which is spaced apart from the positive electrode bag-making system and the negative electrode plate-making system; and
a carrying device which is spaced apart from the stacking device, the carrying device being provided with a carrying member, wherein the carrying member reciprocates between the unit plate composite bag-making system, the stacking device and the negative electrode plate-making system.

18. The bag-making type stacking apparatus of claim 17, wherein the positive electrode plate-making system is configured to produce positive electrode plates, the positive electrode plate comprises a current collector and active substances coated on the current collector, the unit plate composite bag-making system is configured to produce unit plates, the unit plate comprises the positive electrode plate and an diaphragm covering the positive electrode plate, and the diaphragm covers the positive electrode plate;
the negative electrode plate-making system is configured to produce negative electrode plates, the negative electrode plate comprises a current collector and active substances coated on the current collector, and the unit plate covers the negative electrode plate; and
the stacking device is configured to stack the unit plates and the negative electrode plates layer by layer to form a battery cell, the negative electrode plates are arranged between two adjacent layers of the unit plates, and the unit plates are at the outermost layer of the battery cell.
